**Europäisches Patentamt**

**European Patent Office**

**Office européen des brevets**

(19)

(11) Numéro de publication: **0 142 852 B1**

(12) # FASCICULE DE BREVET EUROPEEN

(45) Date de publication du fascicule du brevet:
06.09.89

(51) Int. Cl.⁴: **B 28 B 21/70**

(21) Numéro de dépôt: 84114000.7

(22) Date de dépôt: 20.11.84

(54) Procédé de soudage de deux demi-pièces creuses en céramique, et machine de soudage permettant la mise en oeuvre du procédé.

(30) Priorité: 21.11.83 FR 8318483

(43) Date de publication de la demande:
29.05.85 Bulletin 85/22

(45) Mention de la délivrance du brevet:
06.09.89 Bulletin 89/36

(84) Etats contractants désignés:
AT BE CH DE FR GB IT LI NL SE

(56) Documents cités:
DE-B- 2 839 353
FR-A- 743 917
GB-A- 1 129 951
US-A- 4 364 783

(73) Titulaire: CERAMIQUES ET COMPOSITES, Les Miroirs -
La Défense 3, F-92400 Courbevoie (FR)

(72) Inventeur: Minjolle, Louis, 10, rue Jeanne d'Albret,
F-65000 Tarbes (FR)
Inventeur: Drouet, Michel, 27, rue des Palombes,
F-65290 Juillan (FR)
Inventeur: Fatta-Barou, Jean-Louis, 10 Lotissement Les
Rosiers, F-65460 Bazet (FR)
Inventeur: Callegari, Michel, 43, rue Desaix,
F-65000 Tarbes (FR)
Inventeur: Noel, Jacques, Array Dou Sou Pavilion 43,
F-65000 Tarbes (FR)

(74) Mandataire: Eggert, Hans-Gunther, Dr. et al,
Räderscheidtstrasse 1, D-5000 Köln 41 (DE)

EP 0 142 852 B1

# Description

La présente invention concerne un procédé de soudage de deux demi-pièces creuses en céramique crue. Un tel procédé permet une pièce monobloc de dimensions précises qui reste monolithique après frittage.

Elle concerne également une machine de soudage de deux demi-pièces creuses en céramique permettant la mise en œuvre de ce procédé.

On connaît des procédés de soudage de deux demi-pièces creuses en céramique, mais aucun d'entre eux ne donne entière satisfaction quand il s'agit d'obtenir une pièce monobloc de dimensions très précises.

Le procédé de soudage dit «au miroir» consistant à appliquer chaque demi-pièce sur une face d'une plaque chauffante, ne permet pas une véritable soudure des demi-pièces. Celles-ci sont seulement collées car, au moment de l'application de chaque demi-pièce sur une face du miroir, les liants plastiques contenus dans la matière céramique migrent à la surface du plan de joint, et à l'accouplement des demi-pièces, on effectue une soudure plastique-plastique détruite au décrassage.

Le procédé de soudage par un solvant, soit pur, soit à l'état de barbotine, donne un résultat médiocre car la soudure présente beaucoup de défauts après frittage. De plus, l'emploi d'un solvant impose des contraintes de sécurité.

Le brevet US-A-4 364 783 décrit un procédé de soudage par ultrasons qui permet de réaliser une bonne soudure des deux demi-pièces mais ce procédé présente trois inconvénients majeurs:

– impossibilité de souder plus d'une pièce par machine et par cycle,

– temps de réalisation d'une soudure très long, environ vingt secondes,

– obligation de fabriquer une nouvelle sonotrode pour chaque nouvelle géométrie d'une demi-pièce.

Le DE-B-2 839 353 décrit un procédé de soudage de deux demi-pièces creuses en céramique préfabriquées déjà frittées.

La GB-A-1 129 951 a trait à un procédé de soudage de pièces céramiques denses, un métal d'apport étant prévu entre les deux surfaces à souder.

La présente invention a pour but de procurer un procédé de soudage rapide, sans contrainte de sécurité importante, donnant d'excellentes soudures et présentant une très bonne reproductibilité dimensionnelle de chaque pièce monobloc obtenue après soudure des deux demi-pièces. De plus, les pièces obtenues restent monobloc après frittage.

Le procédé selon l'invention est caractérisé en ce que:

– on charge chaque demi-pièce creuse dans un porte-empreinte (21, 31),

– on met en contact les plans de joint des deux demi-pièces par le rapprochement des deux porte-empreintes,

– on applique une pression de travail sur une première demi-pièce (1) perpendiculairement aux plans de joint, et simultanément on applique une vibration sur la deuxième demi-pièce (2) au moyen d'une table vibrante (33) parallèlement aux plans de joint commandée par un dispositif vibratoire, pour réaliser la soudure des deux demi-pièces par interpénétration dans la région de jonction,

– on sépare les deux porte-empreintes,

– on extrait la pièce monobloc (5) obtenue et on effectue un frittage qui conserve le caractère monolithique de la pièce.

Il présente de préférence au moins l'une des caractéristiques supplémentaires suivantes:

– on règle la durée de la soudure pour obtenir une profondeur d'interpénétration déterminée,

– on positionne de manière précise la deuxième demi-pièce par rapport à la première pour obtenir une pièce monobloc de dimensions précises,

– on attend que la pièce monobloc obtenue soit refroidie avant d'annuler la pression de travail.

La machine de soudage selon l'invention est caractérisée en ce qu'elle est constituée de deux ensembles de travail (20, 30) reliés par un bâti (10), un ensemble de travail (20) mobile verticalement comportant un porte-empreinte (21) dit supérieur muni d'une empreinte (22) dans laquelle est maintenue la demi-pièce (1) dite supérieure, et un ensemble de travail (30) mobile horizontalement comportant un porte-empreinte (31) dit inférieur muni d'une empreinte (32) dans laquelle est maintenue la demi-pièce (2) dite inférieure, l'ensemble mobile verticalement (20) permettant le chargement des deux demi-pièces dans les porte-empreintes, la mise en contact des plans de joint des deux demi-pièces et l'application de la pression de travail sur la demi-pièce supérieure, l'ensemble mobile horizontalement (30) comportant une table vibrante (33) commandée par un dispositif vibratoire et permettant la mise en vibration de la demi-pièce inférieure.

Elle présente de préférence, au moins l'une des caractéristiques supplémentaires suivantes:

– l'ensemble mobile verticalement est déplacé par un vérin de poussée,

– la table vibrante est rappelée par un dispositif de centrage à ressorts.

Il est décrit ci-après à titre d'exemple et en référence aux dessins annexés, un procédé et une machine de soudage selon l'invention.

Les figures 1 à 4 montrent les phases principales du procédé selon l'invention.

La figure 5 montre schématiquement, une machine de soudage selon l'invention.

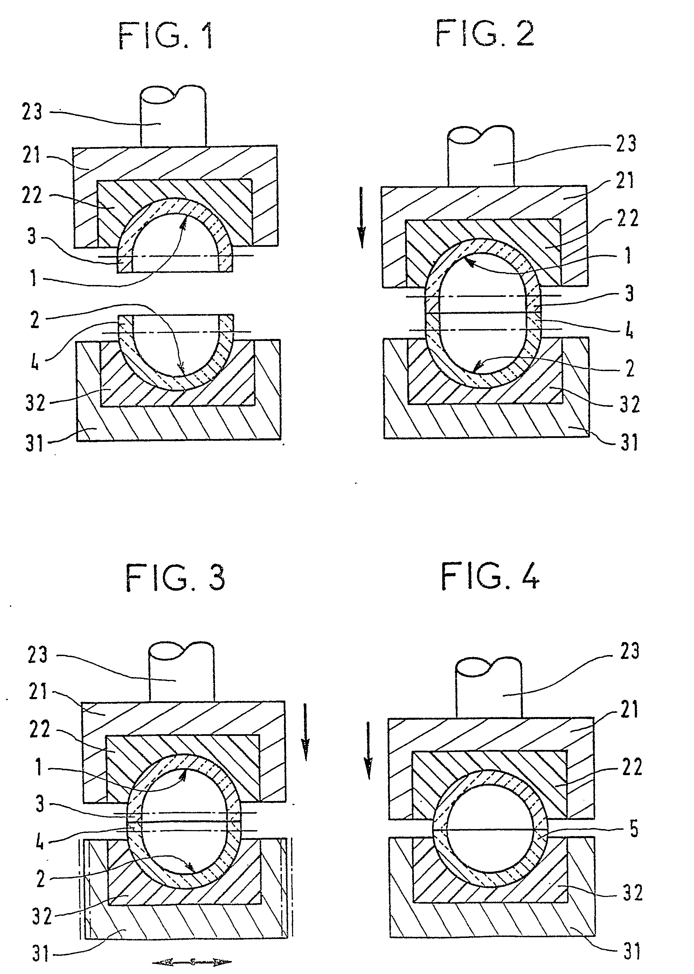

Dans la figure 1, on voit un porte-empreinte supérieur 21 relié à une tige 23 et comportant une empreinte 22, et un porte-empreinte inférieur 31 comportant une empreinte 32. Ces deux empreintes 22, 32 sont obtenues par coulage de matières sur des pièces modèles, ces matières étant par exemple de l'araldite ou du polyuréthane.

On voit également deux pièces creuses en céramique 1, 2 placées dans les empreintes 22, 32, la pièce 1 placée dans l'empreinte 22 et comportant une surépaisseur de matière 3, et la pièce 2 placée dans l'empreinte 32 et comportant une surépaisseur de matière 4.

Dans la figure 2, les deux pièces 1, 2 sont amenées en contact l'une sur l'autre.

La figure 3, représente la phase de soudage proprement dite dans laquelle le porte-empreinte supérieur 21 reçoit une pression de travail verticale, tandis que le porte-empreinte inférieur 31 est mis en vibration pour réaliser une soudure par interpénétration des surépaisseurs de matière 3, 4.

Dans la figure 4, les deux pièces 1, 2 sont soudées et les surépaisseurs de matière 3, 4 ont disparues réalisant ainsi une pièce monobloc 5 de dimensions précises.

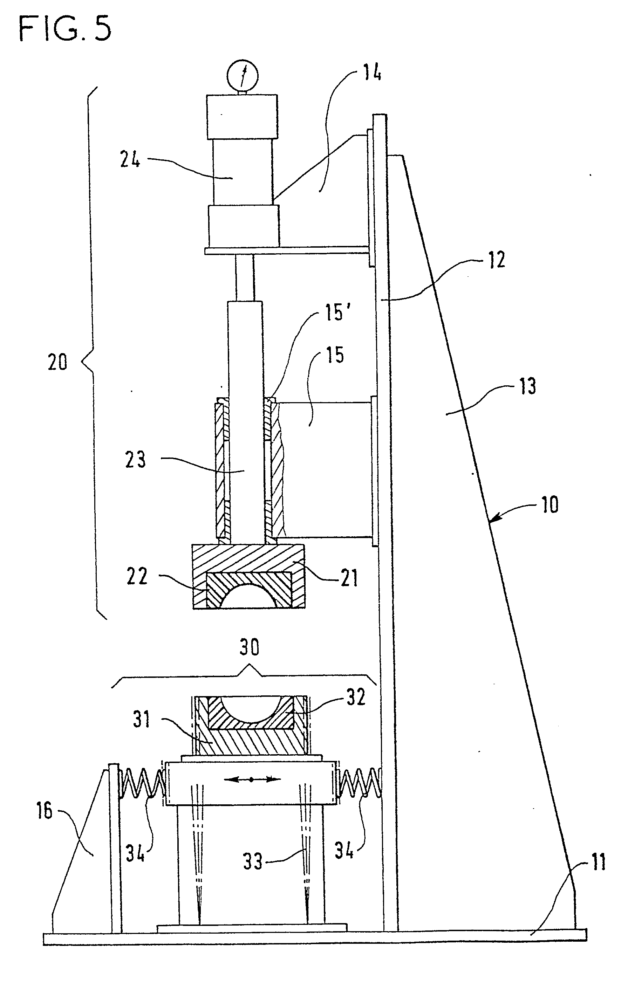

Dans la figure 5, on voit une machine de soudage selon l'invention. Elle est constituée d'un bâti 10 comportant un support horizontal 11 et un support vertical 12, reliés par une nervure verticale 13.

Le support horizontal 11 soutient un ensemble 30 de travail mobile horizontalement. Cet ensemble 30 comporte une table vibrante 33 sur laquelle est fixé le porte-empreinte inférieur 31. Cette table vibrante 33 est rappelée en position centrale, c'est-à-dire axe du porte-empreinte 31 confondu avec l'axe du porte-empreinte supérieur 21, par un dispositif de centrage à ressorts 34, ces ressorts étant placés de part et d'autre de la table et raccordés chacun à une partie fixe qui est, soit un montant 16 relié au support horizontal 11, soit l'autre support 12.

La table vibrante peut être reliée ou désaccouplée rapidement à un ensemble vibratoire de commande quelconque (non représenté).

Le support 12 comporte deux montants fixes 14, 15 soutenant eux-mêmes un ensemble 20 de travail mobile verticalement. Le montant 14 supporte un vérin de poussée 24 et le montant 15 comporte un guidage 15' dans lequel se déplace verticalement une tige 23 raccordée à une extrémité au vérin de poussée et à son autre extrémité au porte-empreinte supérieur 21.

Un cycle de soudage s'effectue de la manière suivante:

Le porte-empreinte 21 étant en position haute, on charge chaque demi-pièce 1, 2 dans son porte-empreinte respectif (figure 1). Par une action du vérin de poussée 24, on procède à la mise en contact des plans de joint de chaque demi-pièce (figure 2).

On réalise le soudage proprement dit en appliquant une pression de travail sur la demi-pièce supérieure 1, comprise généralement entre 0,5 et 20 bars/cm$^2$, et dès que la pression désirée est atteinte, on accouple rapidement la table vibrante à l'ensemble vibratoire de commande et la vibration est transmise à la demi-pièce inférieure 2, la demi-pièce supérieure 1 restant fixe (figure 3).

A ce stade du procédé, on peut appliquer deux solutions différentes pour faire varier la profondeur de pénétration,

– on peut déterminer un temps d'application de la vibration (temps compris entre 0,05 et 3 secondes), par l'intermédiaire d'une minuterie électronique,

– on peut choisir la profondeur d'interpénétration des pièces en agissant sur le réglage d'une jauge électronique de profondeur (profondeur variant de 0,3 à 3 mm).

A l'écoulement du temps défini ou à la profondeur voulue, on sépare la table vibrante de l'ensemble vibratoire de commande, et le dispositif de centrage à ressorts ramène les axes des demi-pièces à se confondre (figure 4). L'alignement peut se faire de manière très précise par exemple ± 0,05 mm.

Il faut déconnecter très rapidement l'ensemble vibratoire de commande pour éviter une étape transitoire décroissante. Pour éviter une bavure trop importante au niveau de la soudure, on utilise de préférence des matières céramiques contenant des cires paraffiniques.

On attend que la pièce monobloc 5 obtenue soit refroidie, pendant un temps compris par exemple entre 0,05 et 2 secondes, puis on remonte l'ensemble de travail 20 et on extrait la pièce monobloc 5.

Ce procédé de soudage s'applique à toutes matières céramiques telles que par exemple, l'alumine, la zircone, la mullite, la cordiérite, le carbure de silicium, le nitrure de silicium, le sialon, etc... Toutes ces matières sont correctement soudées et leur frittage ne détruit ni même ne dégrade la soudure.

**Revendications**

1. Procédé de soudage de deux demi-pièces creuses (1, 2) en céramique crue, consistant en ce que:

– on charge chaque demi-pièce creuse dans un porte-empreinte (21, 31),

– on met en contact les plans de joint des deux demi-pièces par le rapprochement des deux porte-empreintes,

– on applique une pression de travail sur une première demi-pièce (1) perpendiculairement aux plans de joint, et simultanément on applique une vibration sur la deuxième demi-pièce (2) au moyen d'une table vibrante (33) parallèlement aux plans de joint commandée par un dispositif vibratoire, pour réaliser la soudure des deux demi-pièces par interpénétration dans la région de jonction,

– on sépare les deux porte-empreintes,

– on extrait la pièce monobloc (5) obtenue et on effectue un frittage qui conserve le caractère monolithique de la pièce.

2. Procédé de soudage selon la revendication 1, caractérisé en ce que l'on règle la durée de la soudure pour obtenir une profondeur d'interpénétration déterminée.

3. Procédé de soudage selon au moins l'une des revendications 1 à 2, caractérisé en ce que, à la fin de l'opération de soudure, on positionne de manière précise la deuxième demi-pièce par rapport à la première.

4. Procédé de soudage selon au moins l'une des revendications 1 à 3, caractérisé en ce que l'on attend que la pièce monobloc obtenue soit refroidie avant d'annuler la pression de travail.

5. Machine de soudage de deux demi-pièces creuses en céramique, pour la mise en œuvre du procédé selon au moins l'une des revendications 1 à 4, constituée de deux ensembles de travail (20, 30) reliés par un bâti (10), un ensemble de travail (20) mobile verticalement comportant un porte-empreinte (21) dit supérieur muni d'une empreinte (22) dans laquelle est maintenue la demi-pièce (1) dite supérieure, et un ensemble de travail (30) mobile horizontalement comportant un porte-empreinte (31) dit inférieur muni d'une empreinte (32) dans laquelle est maintenue la demi-pièce (2) dite inférieure, l'ensemble mobile verticalement (20) permettant le chargement des deux demi-pièces dans les porte-empreintes, la mise en contact des plans de joint des deux demi-pièces et l'application de la pression de travail sur la demi-pièce supérieure, l'ensemble mobile horizontalement (30) comportant une table vibrante (33) commandée par un dispositif vibratoire et permettant la mise en vibration de la demi-pièce inférieure.

6. Machine de soudage selon la revendication 5, caractérisée en ce que l'ensemble mobile verticalement (20) est déplacé par un vérin de poussée (24).

7. Machine de soudage selon la revendication 5, caractérisée en ce que la table vibrante (33) est rappelée par un dispositif de centrage à ressorts (34).

## Claims

1. A method of welding two hollow half-components (1, 2) of an unfired ceramic, consisting in that:
   – each hollow half-component is loaded into a die holder (21, 31),
   – the jointing planes of the two half-components are then brought into contact by bringing the two die holders together,
   – a working pressure is applied to a first half-component (1) perpendicular to the joint planes, and simultaneously, vibration is applied to the second half-component (2) by means of a vibrating table (33) parallel to the joint planes controlled by a vibrating device, to effect the welding of the two half-components by interpenetration in the jointing region,
   – the two die holders are separated,
   – the monobloc component (5) obtained is extracted and sintered which preserves the monolithic character of the component.

2. A welding method according to claim 1, characterized in that the welding time is adjusted to obtain a specified depth of interpenetration.

3. A welding method according to at least one of claims 1 to 2, characterized in that, at the end of the welding operation, the second half-component is positioned in a precise manner in relation to the first.

4. A welding method according to at least one of claims 1 to 3, characterized in that the monobloc component obtained is allowed to cool before the working pressure is stopped.

5. A machine for welding two hollow ceramic half-components for the implementation of the method according to at least one of claims 1 to 4, constituted by two working assemblies (20, 30) joined by a frame (10), one vertically movable working assembly (20) comprising a die-holder (21) termed the upper, provided with a die (22) wherein there is held the half-component (1) termed the upper, and a horizontally movable working assembly (30) comprising a die-holder (31) termed the lower, provided with a die (32) wherein there is held the half-component (2) termed the lower, the vertically movable assembly (20) allowing the two half-components to be loaded in the die-holders, the joint planes of the two half-components to be brought into contact, and the working pressure to be applied to the upper half-component, the horizontally movable assembly (30) comprising a vibrating table (33) controlled by a vibratory device and allowing the lower half-component to be vibrated.

6. A welding machine according to claim 5, characterized in that the vertically movable assembly (20) is displaced by a ram cylinder (24).

7. A welding machine according to claim 5, characterized in that the vibrating table (33) is recentred by a spring-loaded centring device (34).

## Patentansprüche

1. Verfahren zum Verbinden von zwei Hohlkörperhälften aus roher Keramik, das darin besteht, daß:
   – man jede Hohlkörperhälfte in einen Matrizenrahmen (21, 31) einlegt,
   – man die Verbindungsflächen der beiden Hälften durch Annäherung der beiden Matrizenrahmen in Kontakt bringt,
   – man auf eine Hälfte (1) senkrecht zu den Verbindungsflächen einen Arbeitsdruck ausübt und gleichzeitig die zweite Hälfte einer Schwingung aussetzt mittels eines Vibrationstisches (33), der parallel zu den Verbindungsflächen schwingt und der von einer Vibrationsvorrichtung angetrieben wird, um die Verbindung der beiden Hälften durch Durchdringung im Verbindungsbereich zu erzielen,
   – man die beiden Matrizenrahmen trennt,
   – man den erhaltenen Körper (5) aus einem Block entnimmt und eine Sinterung durchführt, die den monolithischen Charakter des Körpers erhält.

2. Verbindungsverfahren nach Anspruch 1, dadurch gekennzeichnet, daß man die Dauer des Verbindungsvorgangs steuert, um eine vorgegebene Durchdringungstiefe zu erhalten.

3. Verbindungsverfahren nach wenigstens einem der Ansprüche 1 bis 2, dadurch gekennzeichnet, daß man gegen Ende des Verbindungsvorgangs die zweite Hälfte in Bezug auf die erste Hälfte genau positioniert.

4. Verbindungsverfahren nach wenigstens einem der Ansprüche 1 bis 3, dadurch gekennzeichnet, daß man abwartet, bis der erhaltene Körper aus einem Block abgekühlt ist, bevor man den Arbeitsdruck auf Null bringt.

5. Maschine zur Verbindung von zwei Hohlkörperhälften aus Keramik für die Durchführung eines Verfahrens gemäß wenigstens einem der Ansprüche 1 bis 4, bestehend aus zwei Arbeitseinheiten (20, 30), die über einen Rahmen (10) verbunden sind, wobei eine vertikal bewegliche Arbeitseinheit (20) einen oberen Matrizenrahmen (21) aufweist, der mit einer Matrize (22) versehen ist, in der die obere Hälfte (1) gehalten wird, und eine horizontal bewegliche Arbeitseinheit (30) einen unteren Matrizenrahmen (31) aufweist, der mit einer Matrize (32) versehen ist, in der die untere Hälfte (2) gehalten wird, wobei die vertikal bewegliche Arbeitseinheit (20) das Einlegen der beiden Hälften in die Matrizenrahmen ermöglicht, das in Kontakt bringen der Verbindungsflächen der beiden Hälften und die Anwendung eines Arbeitsdrucks auf die obere Hälfte, und wobei die horizontal bewegliche Arbeitseinheit (30) einen Vibrationstisch (33) aufweist, der von einer Vibrationsvorrichtung angetrieben wird und es ermöglicht, die untere Hälfte in Schwingung zu versetzen.

6. Maschine zur Verbindung zweier Hohlkörperhälften nach Anspruch 5, dadurch gekennzeichnet, daß die vertikal bewegliche Arbeitseinheit (20) über eine Hubvorrichtung (24) verschoben wird.

7. Maschine zur Verbindung zweier Hohlkörperhälften nach Anspruch 5, dadurch gekennzeichnet, daß die Rückstellung des Vibrationstisches (33) über eine Zentriervorrichtung mit Federn (34) erfolgt.

# FIG. 1

# FIG. 2

# FIG. 3

# FIG. 4

# FIG.5